# FASCICULE DE BREVET EUROPEEN

(11) **EP 1 240 456 B1**
(45) Date de publication et mention de la délivrance du brevet: **09.11.2005**
(21) Numéro de dépôt: 00990059.8
(22) Date de dépôt: 12.12.2000
(51) Int. Cl.: F16P 3/14, F16P 3/16, B26D 7/24

(54) **SYSTEME DE TRAITEMENT AVEC DISPOSITIF DE PROTECTION POUR TABLE DE TRAITEMENT SECURISE**
BEARBEITUNSSYSTEM MIT SCHUTZVORRICHTUNG FÜR EINEN TISCH FÜR GESCHÜTZTE BEARBEITUNG
PROCESSING SYSTEM WITH PROTECTIVE DEVICE FOR SECURE PROCESSING TABLE

(30) Priorité: 24.12.1999 FR 9916472
(43) Date de publication de la demande: 18.09.2002
(73) Titulaire: Lectra SA, 33611 Cestas (FR)
(72) Inventeur: MAURIN, Denis, F-33510 Andernos (FR); TERRASSE, Eric, F-33610 Canejan (FR)
(74) Mandataire: Joly, Jean-Jacques
(86) Numéro de dépôt international: PCT/FR2000/003477
(87) Numéro de publication internationale: WO 2001/048417

(56) Documents cités:
- US-A- 3 792 260
- US-A- 3 851 168
- US-A- 4 328 726
- US-A- 4 385 508

## Description

### Domaine technique et art antérieur

L'invention concerne un système mettant en oeuvre une table de traitement ou de travail sur laquelle une poutre est amenée à se déplacer. Cette poutre supporte une tête équipée d'un ou plusieurs outils, comme par exemple la table du document US 3 792 260. Dans une application privilégiée, un ou plusieurs outil(s) de découpe équipe(nt) la tête.

L'invention concerne également un système de sécurité, notamment du type destiné à équiper les tables de travail, par exemple des tables de découpe.

L'invention s'applique aux machines de découpe, mais aussi aux machines de traitement de matière en feuilles, notamment aux systèmes d'étiquetage ou aux machines d'impression d'une telle matière.

Des tables de découpe sont utilisées pour la découpe, par exemple par lame pénétrante ou par faisceaux lasers, de matériaux souples, tels que, par exemple, les matériaux textiles.

Elles sont plus particulièrement destinées à l'industrie de l'ameublement, de la confection, notamment dans les opérations de prototypage et dans la fabrication à la demande, et dans certaines applications de découpe de tissus techniques.

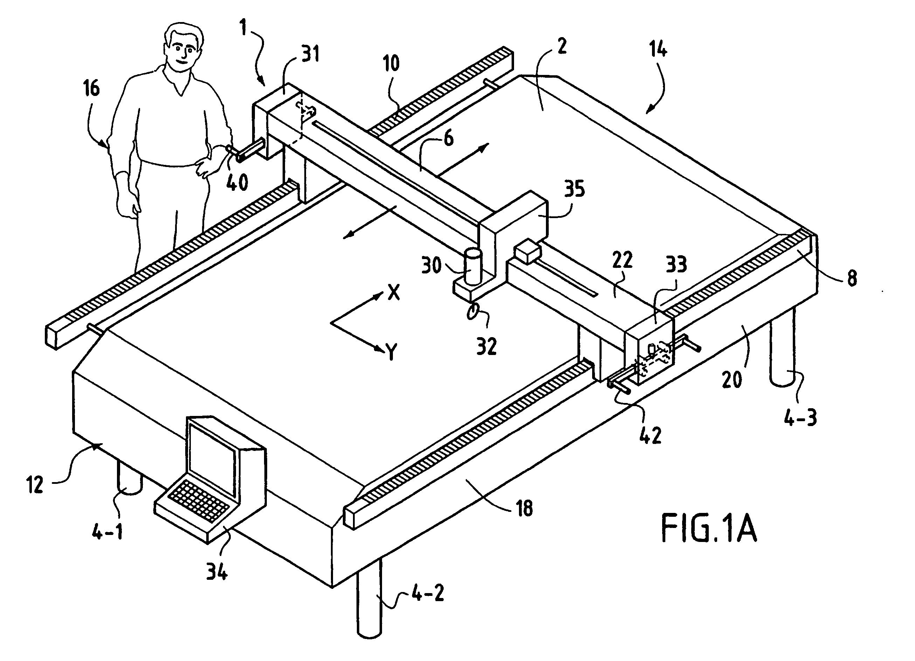

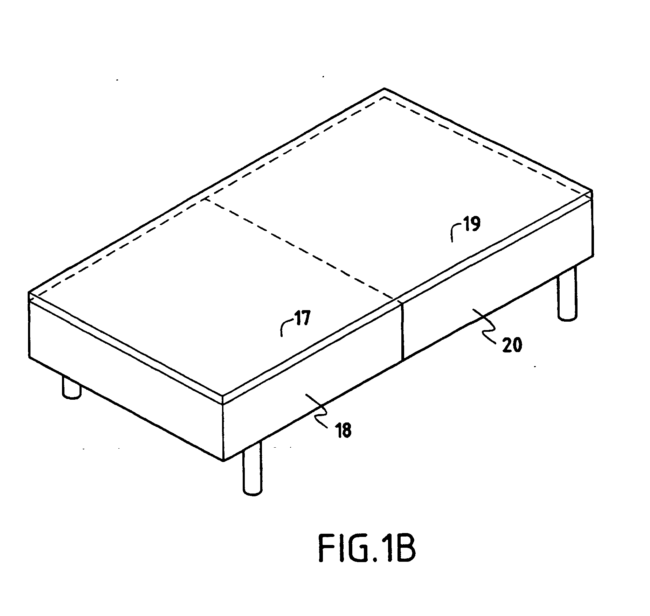

Un exemple d'une telle table est représenté sur les figures 1A et 1 B.

Cette table comporte une table 2 proprement dite, constituée en général de supports de coupe 17, 19 fixés ou collés sur des caissons 18, 20 (figure 1 B). Ces caissons sont isolés entre eux et posés sur un ensemble de pieds 4-1, 4-2, 4-3 (figure 1A) et de longerons (non représentés sur les figures).

Un dispositif d'aspiration est fixé sous chaque caisson. Ces plaques de support de coupe sont dures et poreuses.

La partie supérieure des caissons, sur laquelle reposent les plaques de coupe, est percée. Le dispositif d'aspiration permet donc d'assurer, à travers les caissons et les plaques de coupe, le maintien de la matière.

De part et d'autre de la table, deux rails 8 et 10 sont fixés aux caissons 18 et 20 et permettent de guider une poutre mobile 22 dans ses déplacements suivant l'axe longitudinal X de la table, dans un sens ou dans l'autre entre une zone avant 12 et une zone arrière 14 de la table.

La poutre 22 est équipée d'une tête de coupe 30 montée sur un chariot 35 mobile le long de la poutre suivant la direction Y sensiblement perpendiculaire à la direction X. Cette tête de coupe est équipée d'une lame 32 de coupe pour découper les contours souhaités dans un matériau souple, par exemple du textile, déposé sur la table.

Un pupitre de commande 34 comportant en général un micro-ordinateur de type PC, permet de commander les opérations de lancement de la découpe et du déplacement de la poutre 22 et de la tête de coupe 30 lors de la réalisation des pièces dans le matériau souple. Un opérateur pilote cet ensemble par l'intermédiaire d'un clavier et d'un écran de visualisation qui lui permet notamment d'afficher des placements de pièces à réaliser dans une feuille de matériau souple.

Un dispositif de découpe de ce type est accessible des deux côtés, ainsi qu'à l'avant et à l'arrière de la table, pour permettre des opérations de maintenance ainsi que les opérations d'approvisionnement et de chargement de la matière ou de déchargement des pièces découpées dans la matière souple, ou pour le suivi des opérations de découpe.

Une telle table de découpe présente, en général, une longueur importante, comprise, par exemple, entre 3 mètres et 18 mètres.

Un opérateur 16 suit donc, en général, les opérations de découpe en se déplaçant autour de la table. Le déplacement de la poutre 22 selon l'axe X peut occasionner des chocs latéraux sur l'opérateur. Ceci pose un problème de sécurité de la zone de travail et de maintenance autour de la machine de coupe.

Une première solution à ce problème consiste à équiper la poutre mobile de barres latérales de sécurité 40, 42 qui sont elles-mêmes mobiles par rapport aux chariots porteurs 31, 33 situés en extrémité de la poutre.

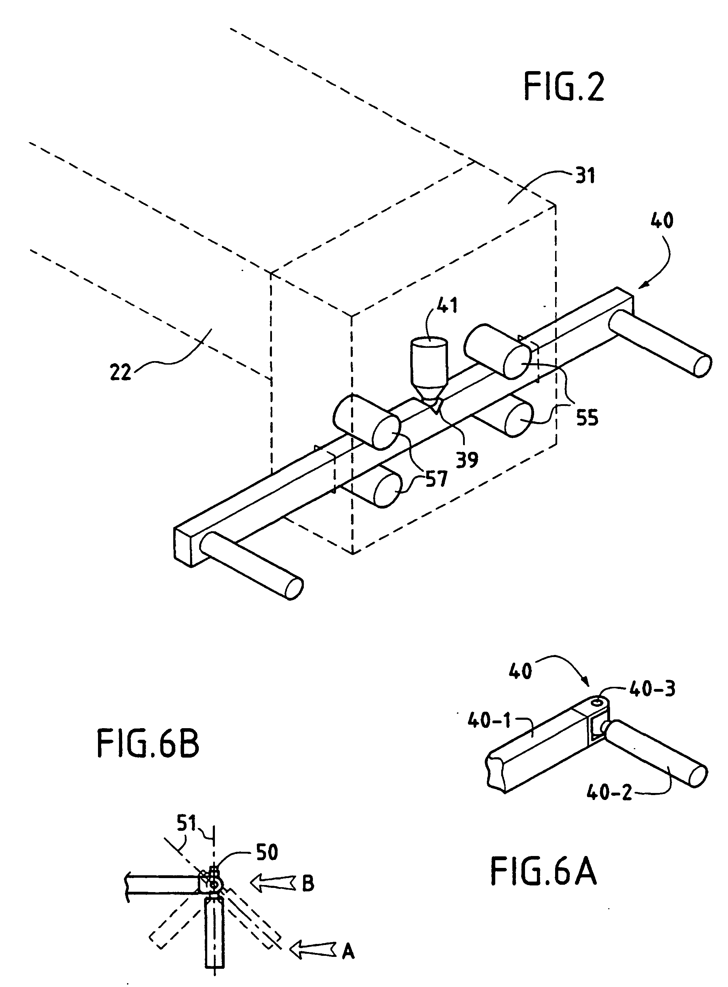

La figure 2 représente de manière plus précise le montage d'une barre de protection 40 dans son chariot 31. La barre passe dans des éléments de guidage 53, 57 fixés sur le chariot 31. Un détecteur électromécanique 41 est lui aussi fixé sur le chariot 31. Une extrémité de ce détecteur vient se positionner dans une encoche 39 de la barre 40. La barre 40 est entraînée dans un déplacement relatif par rapport au chariot 31 lorsqu'elle rencontre un obstacle ou cours du déplacement de la poutre 22 le long de l'axe X.

L'extrémité du détecteur 41 sort alors de l'encoche 39, ce qui déclenche un commutateur et une coupure de l'alimentation du dispositif d'entraînement de la poutre 22.

Ce type de dispositif, bien que satisfaisant à certains égards, ne permet pas de prendre en compte un certain nombre de problèmes. Il se pose donc le problème de proposer un dispositif de découpe à sécurité améliorée.

Notamment, ce type de dispositif ne permet pas de détecter la présence d'un bras ou d'une main d'un opérateur pouvant se trouver au-dessus d'une des extrémités de la poutre 22. L'opérateur peut être suffisamment éloigné de la table de découpe pour ne pas heurter celle des barres latérales qui est située de son côté, ce qui ne déclenche donc pas le système de sécurité, et cependant avoir une main ou un bras positionné au-dessus de l'extrémité de la poutre.

De plus ce type de dispositif connu ne permet pas de détecter un obstacle se situant à proximité de la poutre.
Un tel obstacle peut se situer sur la surface de la table de coupe. C'est par exemple un corps étranger qui, heurté par la poutre et/ou la tête de coupe, pourrait constituer un projectile dangereux.
Un tel obstacle peut aussi être situé en hauteur par rapport à la surface de la table de coupe. C'est par exemple la main d'un opérateur approchant de la poutre 22 ou du support 35.
Le document US 3,851,168 décrit un appareil de détection d'objets sur le parcours d'un organe vertical de desserte en mouvement unidirectionnel.

### Exposé de l'invention

A cette fin, l'invention a pour objet un ensemble mobile pour dispositif de travail ou de traitement de matériaux souples, notamment de matériaux utilisés dans la confection, ou de matériaux textiles, comprenant les caractéristiques de la revendication 1.

La détection d'obstacles latéraux, ou d'un obstacle sur le trajet de la poutre, lors de son déplacement, est donc réalisée optiquement.

Les moyens optiques comportent, de préférence, une ou plusieurs paires d'émetteur(s) et de détecteur(s), chaque émetteur étant monté sur l'un des moyens de détection d'obstacles latéraux, tandis que le détecteur correspondant est monté sur l'autre moyen de détection d'obstacles latéraux.

Selon une variante, les premiers moyens optiques comportent une paire émetteur-récepteur, montée sur l'un des moyens de détection d'obstacles latéraux, les second moyens optiques comportant des moyens, montés sur l'autre moyen de détection d'obstacles latéraux, pour réfléchir en direction du récepteur un faisceau émis par l'émetteur.

En outre, des moyens optiques de détection d'obstacles lors du trajet de la poutre peuvent être montés sur la poutre, par une liaison rigide ou déformable.

L'ensemble des moyens optiques, montés sur la poutre, et montés fixes par rapport aux moyens de détection d'obstacles latéraux, définissent alors un volume de sécurité autour de la poutre.

Les premier et second moyens de détection d'obstacles latéraux peuvent être déplaçables, indépendamment l'un de l'autre par rapport à la poutre, suivant au moins une direction sensiblement perpendiculaire à l'axe de la poutre, et ayant une extension de part et d'autre de la poutre suivant cette même direction.

Des premiers et second moyens de détection de déplacement, par exemple de type détecteurs électromécaniques, peuvent être associés respectivement aux premier et second moyens de détection d'obstacles latéraux.

Les moyens optiques, montés sur les moyens de détection d'obstacles latéraux, constituent alors une deuxième sécurité en cas de détection d'un obstacle latéral et de non fonctionnement des moyens de détection de déplacement associés au premier et / ou au second moyen de détection d'obstacles latéraux.

Selon un autre mode de réalisation, les premiers et second moyens de détection d'obstacles latéraux comportent au moins un support, qui peut être déformable suivant au moins une direction perpendiculaire à l'axe de la poutre, monté sur l'un au moins des premier et second moyens de détection d'obstacles latéraux.

En outre, des moyens optiques peuvent être fixés sur le support déformable pour la détection d'obstacles lors du trajet de la poutre et la détection d'une déformation du support déformable suivant ladite détection perpendiculaire à l'axe de la poutre.

Selon un autre mode de réalisation, au moins l'un des premier et second moyens de détection d'obstacles latéraux comportent au moins une première partie mobile déplaçable suivant ladite direction sensiblement perpendiculaire à l'axe de la poutre, et une deuxième partie articulée sur la première, et pouvant se déplacer en rotation autour d'un axe sensiblement perpendiculaire à ladite direction, l'un des premier et second moyens optiques étant fixé à cette deuxième partie.

Selon encore un autre aspect, les premiers moyens de détection d'obstacles latéraux comportent une première et une deuxième partie, déplaçables l'une par rapport à l'autre, chaque partie étant munie de moyens optiques pour détecter la présence d'un obstacle situé sur le trajet de la poutre et un déplacement relatif de l'un des moyens de détection d'obstacles latéraux par rapport à l'autre.

Les seconds moyens de détection d'obstacles latéraux peuvent, en outre, comporter une troisième et une quatrième partie, déplaçables l'une par rapport à l'autre, chaque partie étant munie de moyens optiques pour détecter la présence d'un obstacle sur le trajet de la poutre et un déplacement relatif de l'un des moyens de détection d'obstacles latéraux par rapport à l'autre.

Avantageusement, un élément optique est disposé sur un chemin optique défini entre les premier et second moyens de détection d'obstacles latéraux. Cet élément optique est, par ailleurs, relié à la tête de découpe, et sa position varie par rapport à cette dernière lorsqu'il rencontre un obstacle au cours du déplacement de la poutre et de la tête de découpe.

Selon encore un autre aspect, la tête de découpe comporte un capot de protection qui la protège lorsqu'il est en position fermée, et qui coupe un chemin optique défini entre les premier et second moyens optiques fixés sur les premier et second moyens de détection d'obstacles latéraux.

L'invention a également pour objet un dispositif de travail pour matériau flexible, comportant :
■ une table, ou support, de travail ;
■ un ou plusieurs ensemble(s) mobile(s) tel(s) que décrit(s) ci-dessus ;
■ des moyens pour déplacer ledit ensemble mobile, monté sur la table ou le support de travail.

L'ensemble mobile, avec ses systèmes de sécurité, est adapté à des tables de travail dont la largeur est, par exemple, comprise entre 0,3 mètre et 5 mètres, pour une vitesse maximum de déplacement de la poutre comprise, par exemple, entre 0 et 3 m/s (soit 180 m/mn).

La table de travail peut être de type fixe, ou bien de type mobile, à convoyeur.

La tête de travail supporte, par exemple, au moins un outil de découpe et / ou un outil d'impression et / ou un outil de dépose d'étiquettes et/ou de perforation.

### Brève description des figures

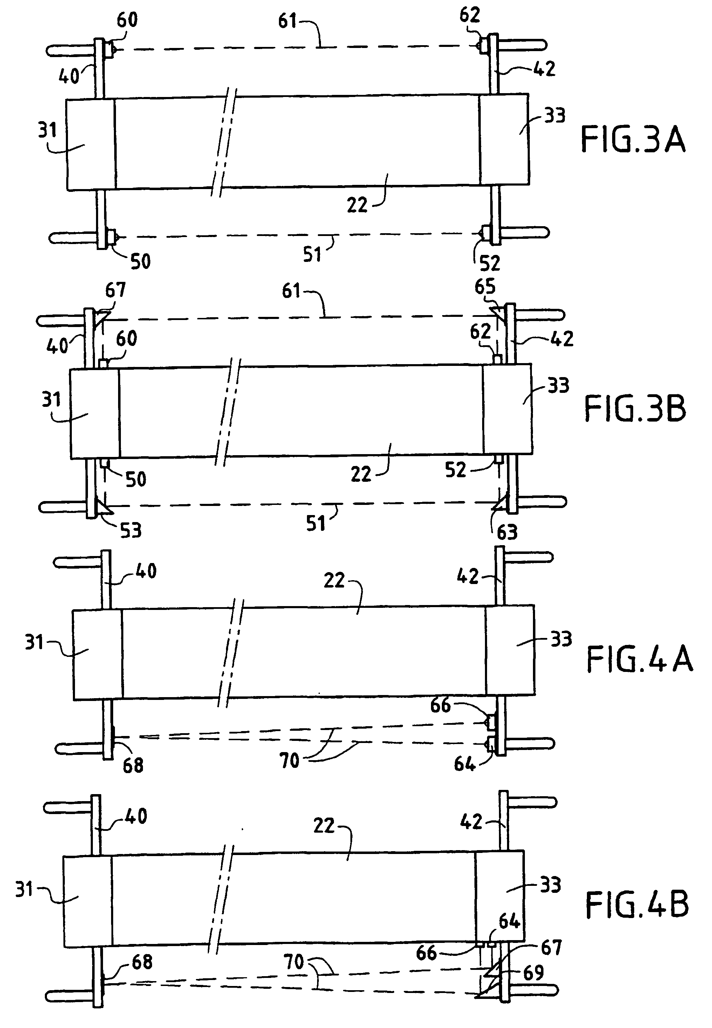

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
■ Les figures 1A et 1 B représentent une structure de table de découpe.
■ La figure 2 représente un dispositif de détection de chocs latéraux, selon l'art antérieur.
■ Les figures 3A à 9 représentent divers modes de réalisation de l'invention.
■ La figure 10 représente schématiquement une table à convoyeur mobile.

### Exposé détaillé des modes de réalisation de l'invention

Un ensemble mobile selon l'invention va d'abord être décrit en liaison avec la figure 3A.

Sur cette figure, de même que sur les autres figures, les références 22, 31, 33, 40, 42 désignent les mêmes éléments que sur la figure 1A.

Une cellule émettrice 50 est positionnée à une extrémité du bras ou de la barre de sécurité 40. Cette cellule est constituée, par exemple, d'une diode laser infrarouge, et émet un faisceau 51. Une cellule réceptrice 52 reçoit le faisceau 51

Le signal de sortie de cette cellule 52 est relié au moteur d'entraînement de la poutre 22. Une variation de l'intensité de ce signal provoque l'arrêt de l'entraînement de la poutre 22.

Tant que les barres 40, 42 restent dans la même position initiale, et qu'aucun objet ne vient interrompre le trajet du faisceau 51, le signal de sortie de la cellule 52 reste constant et la poutre continue son mouvement.

La présence d'un obstacle latéral entraîne un mouvement relatif des barres 40, 42 et une variation du signal de sortie de la cellule 52. Il en résulte une coupure de l'alimentation du circuit de puissance du découpeur; le module de freinage des moteurs d'entraînement de la poutre est actionné.

De même, dès qu'un obstacle (par exemple: la main d'un opérateur) coupe le trajet du faisceau 51, le signal de sortie de la cellule 52 varie, avec les mêmes conséquences.

En fait, les moyens d'entraînement en mouvement de la poutre 22 sont arrêtés dès que les moyens optiques 50, 52 ne sont plus alignés, ou dès que le trajet du faisceau 51 est interrompu.

En outre, chacun des chariots 31, 33 peut être constitué de la manière décrite ci-dessus en liaison avec la figure 2, un contacteur électromécanique 41 étant introduit dans une encoche 39 de la barre 40, 42 correspondante. Les contacteurs détectent tout mouvement des barres 40, 42 par rapport aux chariots 31, 33.

Chacune des barres 40, 42 est alors initialement dans la position illustrée sur la figure 2 : Chaque contacteur électromagnétique 41 est en position fermée, et les moteurs d'entraînement de la poutre 22 entraînent cette dernière normalement dans son mouvement à la surface de la table de coupe 2 (voir figure 1A).

Dès qu'une des deux barres 40, 42 entre en collision avec un obstacle latéral, par exemple un opérateur situé au bord de la table 2, cette barre est entraînée en déplacement par rapport à l'extrémité correspondante de la poutre. L'extrémité du détecteur électromécanique quitte son encoche, déclenchant ainsi une coupure du dispositif d'entraînement de la poutre. De plus, le signal de sortie de la cellule 52 varie brusquement, ce qui résulte là encore en une coupure de l'alimentation du circuit de puissance du découpeur, et le module de freinage des moteurs d'entraînement de la poutre est actionné.

Le détecteur électromécanique et les moyens optiques 50, 52 constituent un système de sécurité redondant. Le récepteur n'étant plus en face de l'émetteur du fait d'une collision avec un obstacle latéral, le signal en sortie de la cellule 52 est modifié, coupant lui aussi l'alimentation du circuit de puissance du découpeur et actionnant le module de freinage des moteurs.

Les moyens d'entraînement en mouvement de la poutre 22 sont donc alors arrêtés dès que l'un des contacteurs 41 quitte son encoche, ou dès que les moyens optiques 50, 52 ne sont plus alignés, ou dès que le trajet du faisceau 51 est interrompu.

Comme illustré sur la figure 3A, on peut également positionner un couple émetteur 60-récepteur 62 à l'autre extrémité des barres 40, 42, cet autre couple assurant également la fonction de détection d'obstacle, de l'autre côté de la poutre 22 par rapport au couple émetteur 50-récepteur 52, et de détection d'un mouvement relatif des barres 40, 42. Ce second couple émetteur-récepteur fonctionne de manière identique au premier couple 50-52.

Par conséquent, en situation normale, les positions relatives des cellules émettrices 50, 60 et réceptrices 52, 62 font que le faisceau est correctement transmis.

Si un obstacle est présent sur la table 2 et vient à couper l'un des faisceaux 51, 61, la machine de découpe est arrêtée.

En cas de détection d'un obstacle latéral, la position relative des cellules émettrices et réceptrices est modifiée et il y a arrêt comme déjà expliqué ci-dessus.

Si, en outre, le dispositif comporte un système de sécurité électromécanique, par exemple du type décrit ci-dessus en liaison avec la figure 2, le système de détection optique 50, 52, 60, 62 constitue là encore un système de sécurité redondant.

L'arrêt d'urgence intervient alors lorsqu'il y a interaction mécanique sur l'une des barres 40, 42, entraînant modification de l'état du contacteur électromécanique. Du fait de cette interaction mécanique, les cellules 50 et 52 (et, éventuellement, 60 et 62) ne sont plus alignées et le faisceau n'est plus correctement transmis.

Selon une variante (figure 3B), l'émetteur 52 ou les émetteurs 52 et 62 est (sont) fixé(s) sur la poutre 22 ou sur ses extrémités 31, 33, de même que le détecteur 50 et, éventuellement, le détecteur 60. Des réflecteurs 53, 63, 65, 67 permettent d'orienter le faisceau de manière convenable.

Selon un autre mode de réalisation, illustré sur la figure 4A, un émetteur 64 et un récepteur 66 sont positionnés sur la même barre 42. Un faisceau infrarouge, émis par l'émetteur 64, est réfléchi par un élément réfléchissant 68 fixé sur l'autre barre 40 et est renvoyé par cet élément réfléchissant sur le détecteur 66.

Là encore, tout obstacle sur le trajet 70 du faisceau infrarouge entraîne une modification brusque du signal de sortie du détecteur 66, ce qui coupe les moyens d'entraînement de la poutre 22. Si l'une des barres 40, 42 rencontre un obstacle, elle est entraînée dans un déplacement relatif par rapport à l'extrémité correspondante 31, 33 de la poutre. Le faisceau émis par l'émetteur 64 n'est alors plus réfléchi vers le détecteur 66, provoquant également l'arrêt des moyens d'entraînement de la poutre 22.

Selon une variante, représentée sur la figure 4B, l'émetteur 64 et le détecteur 66 sont fixés sur la poutre elle-même (ici, à une de ses extrémités) et les faisceaux sont réfléchis par des miroirs 67, 69, montés sur la barre 42.

Ce mode de réalisation des figures 4A et 4B est plus aisé à réaliser que celui des figures 3A et 3B, car il ne nécessite la modification que d'un seul des bras (le bras 42), le réflecteur 68 pouvant être simplement collé sur le bras 40.

Dans le cas des figures 4A et 4B, si un système de détecteur électromécanique est en outre prévu, l'ensemble émetteur-réflecteur-détecteur joue alors encore un rôle de sécurité redondant en cas de défaillance d'un contacteur électromécanique.

Dans toutes les variantes décrites ci-dessus, le positionnement des cellules émettrices et réceptrices sur les barres 40, 42 permet de limiter la surface inaccessible, de part et d'autre de la poutre 22 elle-même, au minimum nécessaire. Ceci permet de gérer efficacement les actions d'approvisionnement en matière, dans la zone 14 du dispositif, les opérations de suivi de coupe, et les opérations de déchargement dans la zone 12 avant du dispositif. En particulier, les opérations de suivi de coupe peuvent nécessiter des interventions manuelles de la part de l'opérateur 16, à un endroit qui est, à un certain instant, éloigné de la position de la poutre et de la tête de découpe. Une telle intervention ne nécessite pas l'interruption de la découpe : celle-ci n'est interrompue que si les mains ou les bras de l'opérateur traversent l'un des faisceaux ou l'un des trajets optiques 51, 61 ou 70. Ainsi, l'ensemble mobile selon l'invention est efficace et compatible avec une vitesse de déplacement importante de la poutre 22, comprise au maximum 3 m/s.

De même, la présence d'un objet sur la table de coupe 2 n'interrompra le déroulement des opérations de découpe que si cet objet interrompt l'un des faisceau, ou trajet optique 51, 61 ou 70. Ceci permet à un opérateur d'enlever cet objet de la surface de la table de découpe 2, avant que cet objet ne perturbe les chemins ou faisceaux optiques de protection, et ceci sans interruption des opérations de découpe.

Selon un autre mode de réalisation, illustré sur la figure 5A, un ou plusieurs émetteurs 72 sont montés sur la poutre mobile, par exemple à chacune de ses extrémités, chaque émetteur 72 étant associé à un détecteur 74 avec lequel il définit un chemin optique 78.

Les liaisons 73, 75 par lesquelles les émetteurs 72 et les détecteurs 75 sont reliés à la poutre peuvent être rigides. Ces liaisons peuvent aussi être déformables, notamment suivant une direction X perpendiculaire à l'axe de la poutre.

Tout obstacle disposé sur le trajet défini par l'un des chemins optiques 78 entraîne une modification de signal de sortie d'au moins un des détecteurs 74. Cette modification interrompt les moyens d'entraînement de la poutre et de la tête de découpe, et provoque l'arrêt des opérations de découpe.

Comme on voit sur la figure 5A, les trajets optiques 78 passent au dessus du chariot 35 qui est porteur de la tête de découpe 30. Ainsi, lorsqu'un opérateur tente une intervention sur la tête de découpe, ou sur les moyens 35 porteurs de la tête de découpe, ou sur la poutre qui porte les moyens 35, l'interruption de l'un des trajets optiques 78 provoque l'arrêt de la machine, et ceci bien que, là encore, les moyens de détection 40, 42 n'aient pas détecté la présence d'un obstacle latéral.

L'ensemble des trajets optiques 51, 61, 78, définit un volume de sécurité autour de l'ensemble mobile de découpe, ou encore autour de la poutre 22 et des moyens de détection latéraux 40, 42. De cette manière, les dimensions des zones inaccessibles de la machine sont réduites au volume minimal nécessaire.

Si les liaisons 73, 75 sont rigides, la détection d'obstacles latéraux est assurée par les barres latérales 40, 42, associées au détecteur électromécanique de la figure 2 et/ou aux moyens optiques 50, 60, 52, 62.

Si l'une au moins des liaisons 73, 75 est déformable suivant au moins la direction X, il est possible de détecter la présence d'un objet (par exemple, le bras d'un opérateur) qui est situé au-dessus d'une des extrémités de la poutre 22, mais que les moyens de détection 40, 42 ne permettraient pas de détecter. Lorsque cet objet entre en collision avec l'une des liaisons 73, 75, la transmission du faisceau à l'un des détecteurs est interrompue, ce qui interrompt le fonctionnement de la machine de la manière déjà expliquée ci-dessus en liaison avec les figures 3A et 3B.

Si les barres latérales sont déjà équipées de moyens de détection de leur mouvement du type décrit ci-dessus en liaison avec la figure 2 et/ou les figures 3A à 4B, le mode de réalisation de la figure 5A améliore la détection d'obstacles latéraux. En effet on peut alors détecter la présence d'un obstacle latéral. Mais on peut aussi détecter la présence d'une main ou d'un bras au-dessus de l'extrémité de la poutre, présence que les barres latérales munies de leurs moyens de détection n'auraient pu détecter.

Là encore, ce mode de réalisation permet de gérer efficacement les actions d'approvisionnement de la matière, les opérations de suivi de coupe et les opérations de déchargement. Une intervention d'un opérateur ne nécessite l'interruption de la découpe que si les mains ou les bras de l'opérateur traversent l'un des faisceaux ou trajets optiques 51, 61, 78 ou si l'une des barres 40, 42 de détection latérale est heurtée ou si, éventuellement, l'une des liaisons 73, 75, déformable suivant X, est déformée.

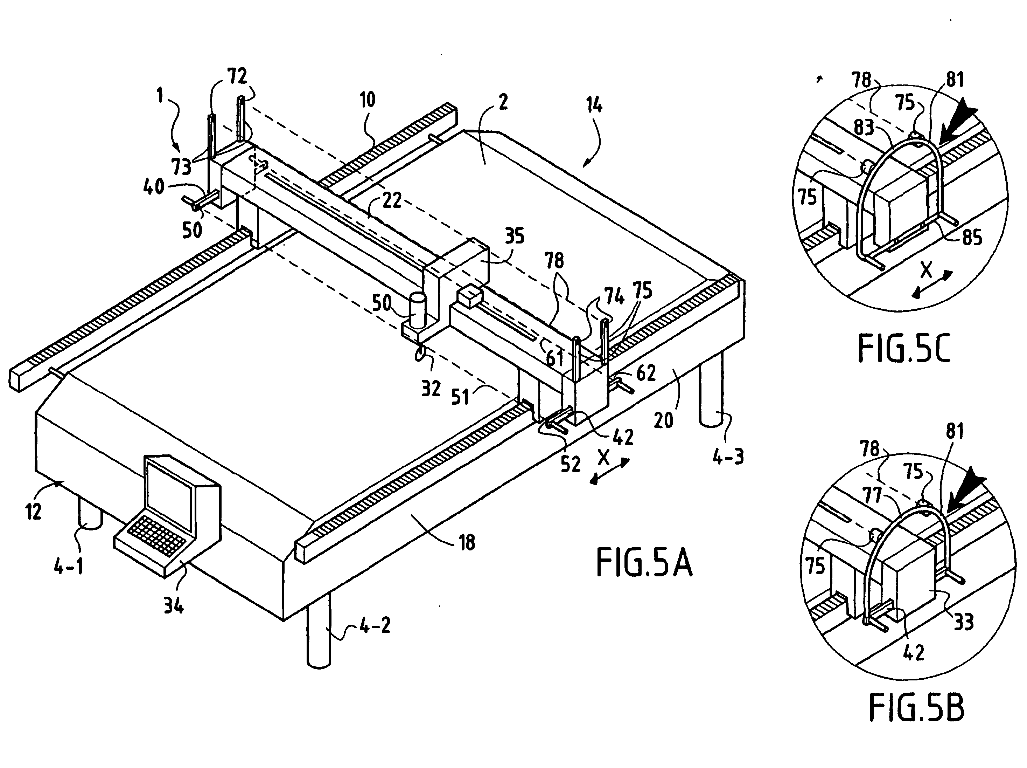

La figure 5B représente une variante de la figure 5A dans laquelle des supports 77 sont montés à chaque extrémité de la poutre 22. Sur la figure 5B, seulement une partie du dispositif est représentée, l'autre extrémité pouvant être symétrique de celle-ci par rapport à un axe de symétrie de la table. Le support 77 est monté sur la barre de sécurité latérale 42. Des moyens optiques (ici, une partie 75 seulement de ces moyens est représentée) définissent, comme sur la figure 5A, des chemins optiques 78 qui passent au-dessus du chariot 35. Ces chemins optiques constituent, avec les chemins 51, 61, un volume de sécurité autour de l'ensemble mobile de découpe.

Le même type d'événement que dans le cas de la figure 5A permet d'arrêter le mécanisme d'entraînement de la poutre 22.

Par ailleurs, comme dans le cas des liaisons 73, 75 de la figure 5A, le support 77 de la figure 5B peut être déformable suivant la direction X, ce qui permet de détecter des obstacles latéraux, et en particulier la présence d'une main ou d'un bras d'un opérateur, même lorsque les barres 40, 42 restent dans leur position initiale.

Ainsi, sur la figure 5B, un opérateur peut heurter l'arceau 77 au point 81 (le choc ou la collision est représenté par une flèche), déplaçant ainsi l'un des détecteurs 75, ce qui conduit à l'arrêt de la machine de découpe, alors que la barre 42 reste à sa position initiale.

Selon un autre mode de réalisation, représenté en figure 5C, un support 83, similaire au support 77 de la figure 5B, peut être déformé suivant la direction X. Ce support est fixé à une extrémité de la poutre 22. La partie inférieure 85 de ce support est fixe par rapport à l'extrémité de la poutre mobile: à la différence des modes de réalisation précédents, celui-ci ne comporte pas de barre 40, 42 mobile suivant la direction X par rapport à la poutre 22. La détection d'obstacles latéraux est assurée par la souplesse ou le caractère déformable de la structure ou du support 83 selon la direction X. Comme dans le cas de la structure de la figure 5B, la présence d'un objet, ou de tout autre obstacle, par exemple un membre d'un opérateur, qui vient en collision au point 81, entraîne le déplacement de l'un des détecteurs 79, ou de l'un des émetteurs (non représentés sur la figure), ce qui entraîne, là encore, un arrêt du dispositif de découpe.

Un système de moyens optiques de type émetteur(s)/détecteur(s) peut être monté sur la partie inférieure 85 du support, comme sur la figure 3A, afin de détecter la présence d'objets en surface de la zone de coupe.

L'interruption d'un des faisceaux optiques par un bras ou une main d'un opérateur conduit également à l'arrêt du dispositif de découpe.

On peut aussi utiliser, à la place de la structure d'arceau 77, 83 des figures 5B et 5C, une structure reliée à la fois aux deux extrémités 31, 33 de la poutre mobile 22, cette structure étant munie de moyens optiques tels que le système d'émetteur / récepteur 72, 74, 75, 79 des figures 5A à 5C, et cette structure présentant une certaine souplesse ou capacité de déformation selon la direction X indiquée sur les figures. La présence d'un obstacle latéral, par exemple le membre d'un opérateur, conduit à une déformation d'une telle structure, et à une perturbation des chemins optiques entre les moyens émetteurs et les moyens récepteurs qu'elle porte. Cette perturbation du chemin optique conduit à une variation d'intensité du signal émis par les détecteurs, ce qui, là encore, provoque un arrêt du dispositif de découpe.

Une telle structure peut être utilisée sans autre moyen de détection latéral, en particulier sans le système de barres 40, 42. Elle peut être aussi combinée avec un système de barres 40, 42 déplaçables selon la direction X par rapport à la poutre 22 et déclenchant un système de détecteurs électromécaniques comme déjà décrit ci-dessus, ou une variation du signal reçu par un des récepteurs fixés sur ces barres.

La combinaison d'une telle structure avec un tel système de barres de sécurité 40, 42 permet d'obtenir une détection latérale très efficace.

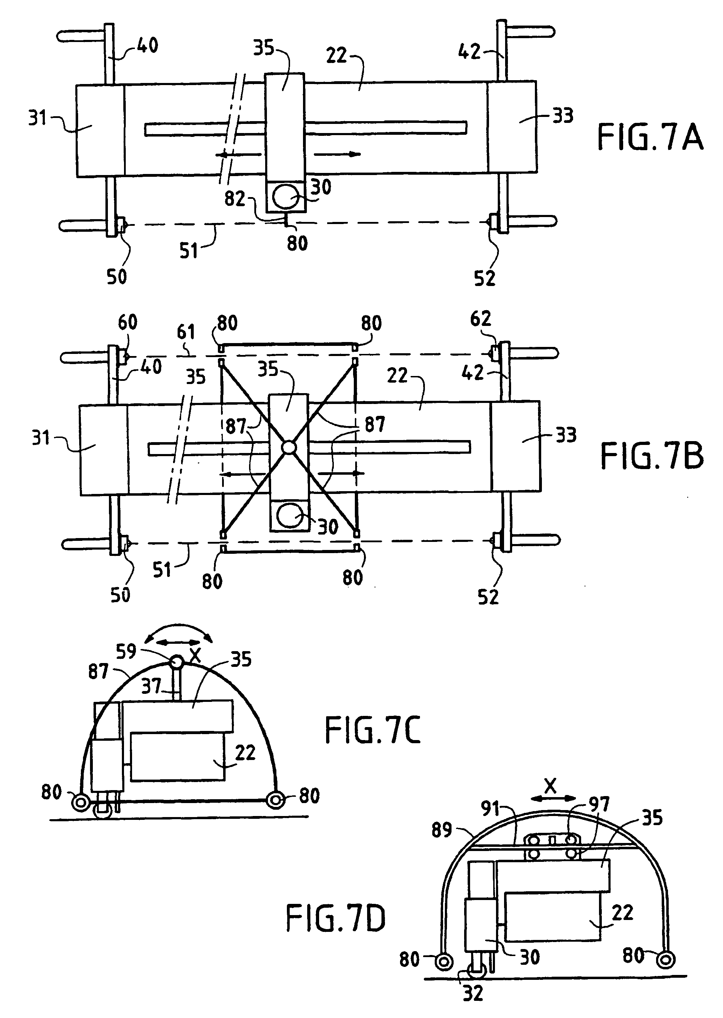

Selon un autre mode de réalisation, les barres latérales de détection d'obstacle 40, 42 peuvent avoir la forme représentée sur les figures 6A et 6B. A l'extrémité d'une première barre 40-1, une deuxième barre 40-2 est montée en rotation autour d'un axe ou d'une articulation 40-3. L'émetteur 50 est monté à l'extrémité de cette partie 40-2 de manière à émettre un faisceau qui traverse la machine de découpe. Lorsque la partie 40-2 rencontre un obstacle latéral, ou subit un choc, représenté par la flèche A, elle est entraînée en rotation, comme illustré sur la figure 6B, ce qui conduit à la déviation du faisceau émis par l'émetteur 50. Là encore, il se produit une variation du signal de sortie du récepteur correspondant (non représenté sur ces figures), et un arrêt du dispositif de découpe.

Un choc latéral, représenté sur la figure 6B par la flèche B, se produisant dans l'axe de la barre 40-1 résulte, comme précédemment, en un déclenchement du contacteur 41 et, également, en un arrêt de la machine. En cas d'utilisation d'un système de contacteurs du type illustré sur la figure 2, l'ensemble émetteur 50-recepteur 52 constitue, là encore, une deuxième sécurité en cas de défaillance d'un de ces contacteurs.

Il est également possible, sur une articulation du type de celle représentée sur les figures 6A et 6B, de monter un détecteur à l'extrémité de la partie 40-2. Les deux barres de détection d'obstacle 40, 42 peuvent donc être toutes deux équipées de ce type d'articulation, et ceci à chacune de leurs extrémités.

Un autre mode de réalisation est illustré sur la figure 7A, pour laquelle des références numériques identiques à celles de la figure 3 désignent des éléments identiques ou correspondant. Un élément optique 80 est positionné sur le trajet du faisceau 51 et est, par ailleurs, relié à la tête de découpe 30, ou au chariot 35 qui supporte cette tête de découpe, par l'intermédiaire d'une liaison 82. Cette liaison n'est pas rigide, ce qui permet une modification de la position relative de l'élément optique 80 et de la tête de découpe 30 lorsque l'élément optique rencontre un obstacle sur son trajet. Il en résulte, là encore, une modification du signal de sortie du détecteur 52 et un arrêt des opérations de découpe.

Lorsqu'aucun obstacle n'est rencontré, l'élément 80 reste en position fixe par rapport au faisceau 51.

L'élément optique 80 peut être, par exemple, une mire optique.

Une variante de ce mode de réalisation est représentée sur les figures 7B (vue de dessus) et 7C (vue de côté). Un support 37 est placé sur le chariot 35. A l'extrémité 59 de ce support sont placées des liaisons 87, non rigides. A l'extrémité libre de ces liaisons, des éléments optiques 80, tels que ceux mentionnés ci-dessus en liaison avec la figure 7A, sont normalement positionnés sur le trajet des faisceaux 51, 61. Comme représenté sur la figure 7C, ces liaisons réunies au sommet du support 37 ont de préférence une forme courbée ou en arcs de cercle ou en arceaux, et constituent ainsi une protection en "parapluie" ou en forme de demi-sphère autour de l'ensemble formé par la tête de travail 30 et son support 35. L'ensemble est de préférence mobile en rotation autour de l'extrémité 59 du support 37 et/ou en translation le long de l'axe X.

Une autre variante de ces modes de réalisation est représentée sur la figure 7D en vue de côté. Un ensemble de supports ou d'arceaux 89 est monté autour de la tête 35. Ces supports sont de préférence translatables selon l'axe X, par exemple à l'aide d'une barre rectiligne 91 et de moyens de guidage 97 de cette barre. Aux extrémités de ces supports, on retrouve des éléments optiques 80 situés sur les trajets des faisceaux 51, 61. L'enveloppe définie par les arceaux est une portion de demi-cylindre.

Dans ces diverses variantes, une modification de la position relative d'un des éléments optiques 80 et de la tête de découpe 30 se produit lorsque le support des éléments optiques rencontre un obstacle sur son trajet. Il en résulte, là encore, une modification du signal de sortie de l'un des détecteurs et un arrêt des opérations de la machine.

Lorsqu'aucun obstacle n'est rencontré, les éléments 80 restent en position fixe par rapport aux faisceaux 51, 61.

Ces modes de réalisation peuvent être combinés avec l'un ou l'autre des modes de réalisation décrits en liaison avec les figures 5A ou 5B. De plus, l'émetteur et/ou le détecteur peu(ven)t être fixé(s) à la poutre elle-même, un système de miroirs de renvois assurant la direction correcte du faisceau, comme sur la figure 3B ou 4B.

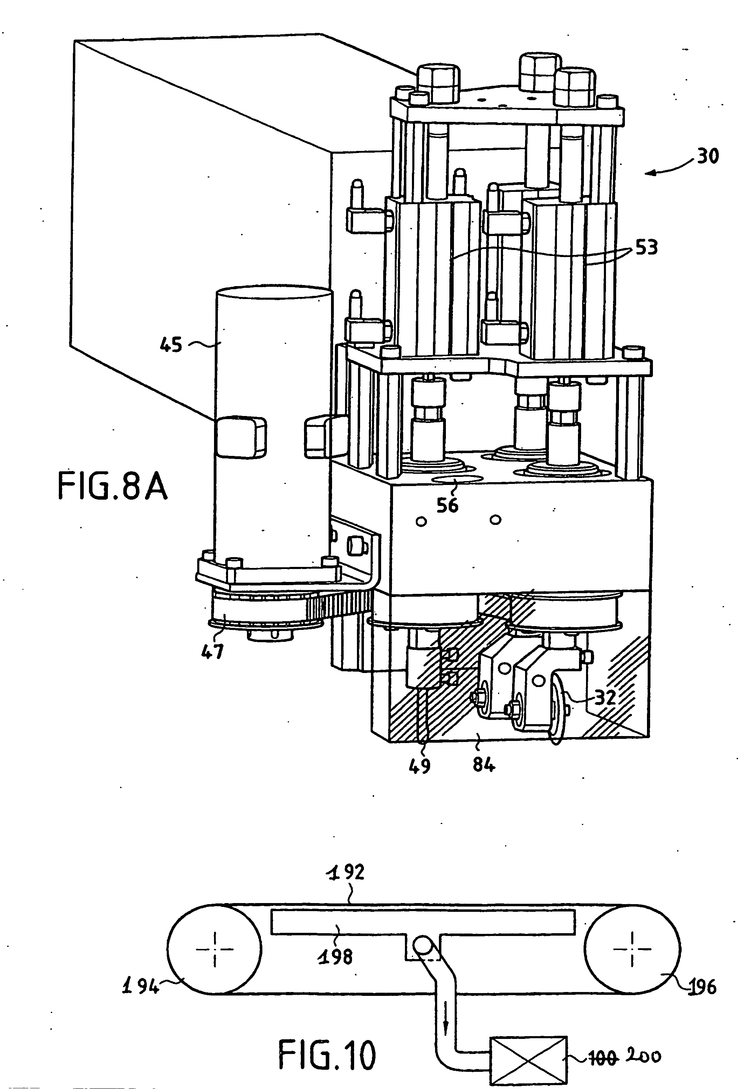

En général, comme illustré la figure 8A, la tête de tête de découpe 30 est munie d'un capot de protection 84. Ce capot est en position ouverte lorsque l'appareil est à l'arrêt et qu'un opérateur effectue une intervention sur la tête de découpe, par exemple, le remplacement de la molette de découpe 32.

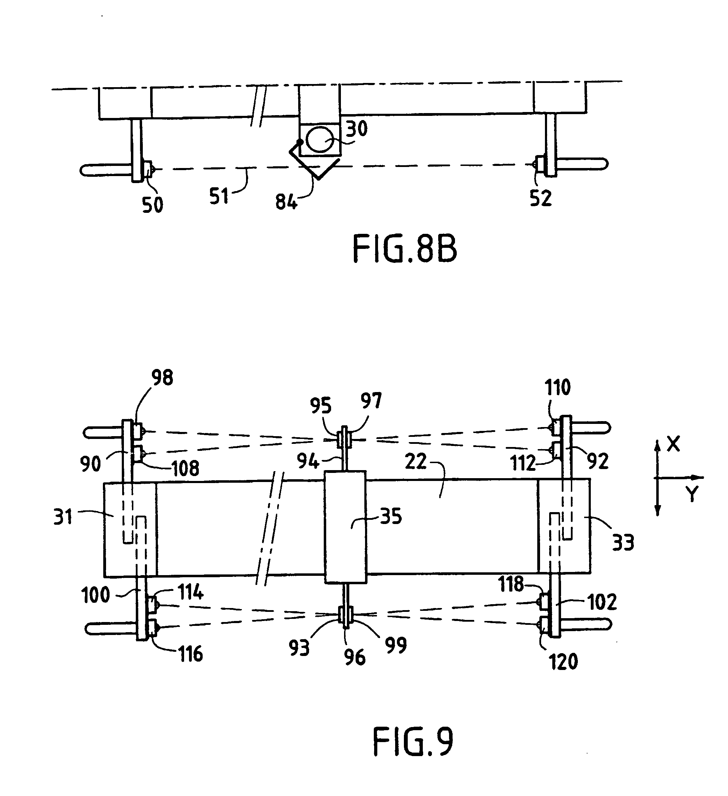

Comme illustré sur la figure 8B, l'ensemble est, de préférence, dimensionné de manière à ce que le capot 84 coupe le trajet optique 51 lorsqu'il sort de sa position fermée. Le signal de sortie du détecteur 52 subit alors une modification importante, entraînant un arrêt des opérations de découpe. Ainsi, une ouverture intempestive du capot 84, en cours de fonctionnement du dispositif, ne peut avoir lieu. De même, toute intervention prématurée d'un opérateur, alors que l'appareil est encore sous tension, et même si la poutre 22 et le chariot 35 sont immobiles, conduit à un état d'arrêt total du dispositif et des opérations de découpe.

Selon un autre mode de réalisation, illustré sur la figure 9, les barres latérales de détection d'obstacle comportent chacune une première partie 90, 92, et une deuxième partie 100, 102, indépendantes l'une de l'autre. Par exemple, un obstacle sur l'élément 102 modifie la position de cet élément par rapport à la poutre 22, sans que la position relative de cette dernière et de l'élément 92 soit modifiée. Chacun des éléments 90, 92, 100, 102 est, par exemple, muni d'un système de fente et de contacteur électromécanique tel que le système 39-41 de la figure 2. Le déplacement de l'un ou de l'autre de ces éléments, par rapport à la poutre 22, entraîne le déclenchement du contacteur et l'arrêt de la machine de découpe, comme déjà expliqué ci-dessus.

Par ailleurs, des moyens optiques permettent également de détecter le mouvement de chacun de ces éléments par rapport à l'élément situé en face et par rapport à la poutre 22.

Par exemple, il est possible de munir l'élément 90 d'un émetteur qui émet un faisceau reçu par un récepteur porté par l'élément 92. Le déplacement relatif de l'un de ces éléments par rapport à l'autre entraîne une variation brusque du signal de sortie du récepteur et, là encore, un arrêt du système d'entraînement de la poutre 22. Il est également possible de prévoir un émetteur et un récepteur sur l'un des éléments 90, 92, l'autre élément étant muni d'un système de réflexion, comme sur les figures 4A ou 4B.

Le même type de moyen de détection peut être prévu sur les éléments 100, 102.

Sur la figure 9 est représenté un mode de réalisation dans lequel chacun des éléments 90, 92, 100, 102 est muni d'un émetteur 98, 110, 114, 118 et d'un récepteur 108, 112, 116, 120. Ces moyens optiques sont combinés à des éléments réflecteurs 95, 97, 93, 99, fixés par des liaisons 94, 96 aux extrémités du support 35 de tête de découpe.

Lorsque la position de l'une des barres 90, 92, 100, 102 est modifiée du fait de la présence d'un obstacle latéral, le signal de sortie du détecteur correspondant varie brusquement, ce qui entraîne l'arrêt des moyens d'entraînement de la poutre 22. Ce mode de réalisation permet, en outre, d'identifier la position, par rapport à la poutre, d'un obstacle qui se situerait sur le trajet de l'un des faisceaux émis par l'un des émetteur ou réfléchi vers l'un des détecteurs, par rapport à la poutre 22. En effet, en fonction du faisceau qui est interrompu, il est possible de déterminer si l'obstacle se situe en avant ou en l'arrière de la poutre 22 (selon la direction X), ou dans la partie droite - gauche de cette poutre (selon la direction Y). Une telle information peut être, par exemple, affichée sur l'écran d'affichage d'un système informatique tel que le système 34 représenté sur la figure 1 A. La table de découpe peut avoir des dimensions relativement importantes, et il peut être utile, pour un opérateur situé à proximité de la console 34, d'avoir immédiatement une information sur la position d'un éventuel objet sur la table de découpe, sans avoir à se déplacer à proximité de la poutre 22.

Il est également possible, de cette manière, de mémoriser les aléas rencontrés lors du déroulement des opérations. On peut ainsi, ensuite, mieux prendre en compte de tels aléas et améliorer la productivité, en particulier le processus de manutention autour de la machine.

L'invention a été était décrite en application à une table fixe. Elle peut également s'appliquer à un dispositif de découpe d'une table mobile.

Une table mobile, à convoyeur, présente par exemple globalement une structure similaire à celle décrite ci-dessus en liaison avec la figure 1 A. La surface de coupe peut être constituée par un système de support et de convoyage de la matière, représenté schématiquement sur la figure 10.

Ce système comporte :
■ un support de coupe constitué par une bande 192 micropercé, en polyuréthanne, monté autour de deux axes 194, 196 de renvoi permettant un convoyage de la matière,
■ une table 198, sous cette bande, dotée de caissons percés, montés s transversalement, juxtaposés, et surmontés d'une plaque percée servant de support à la bande micropercée,
■ un système d'aspiration 200 en relation avec chacun des caissons, l'ensemble assurant le maintient par dépression de la matière sur la surface de la table.

Selon un autre exemple de table mobile, la surface de coupe est un lit à poils constitué de pavés montés en juxtaposition sur des rails glissés sur une chaîne montée autour de deux axes. Un tel dispositif est notamment décrit dans le document US - 4 328 726.

Le dispositif de sécurité selon l'invention, et l'ensemble mobile selon l'invention, combinant des moyens de détection d'obstacles latéraux, de type électromécanique, et des moyens optiques fixés à ces moyens de détection d'obstacles latéraux, présentent les mêmes avantages que dans le cas d'une table fixe.

L'invention a été décrite avec des moyens optiques de type émetteurs / récepteurs infrarouge. Il est également possible d'utiliser d'autres systèmes émetteurs / récepteurs dans d'autres gammes de longueur d'onde (domaine visible, par exemple), l'émetteur étant, par exemple, une diode ou une source laser.

## Revendications

1. Ensemble mobile pour dispositif de travail, comprenant :
■ une poutre (22) apte à se déplacer suivant deux directions opposées et s'étendant suivant un axe horizontal, entre une première et une seconde extrémités (31, 33), et une tête de travail (30) montée sur cette poutre ; **caractérisé en ce qu'**il comporte en outre :
■ des premier et second moyens de détection d'obstacles latéraux (40, 42, 77, 83, 90, 92, 100, 102), montés à chaque extrémité de la poutre, déplaçables ou déformables, par rapport à la poutre et indépendamment l'un de l'autre, suivant au moins une direction (X) sensiblement perpendiculaire à l'axe de la poutre, et ayant une extension de part et d'autre de la poutre suivant cette même direction,
■ des premier et second moyens optiques (50, 52, 60, 62, 75, 79), respectivement fixés sur les premier et second moyens de détection d'obstacles latéraux ou sur au moins l'une des extrémités de la poutre, pour détecter d'une part la présence d'un obstacle situé sur le trajet de la poutre et, d'autre part, un déplacement relatif et/ou une déformation des moyens de détection d'obstacles latéraux par rapport à l'autre moyen de détection d'obstacles latéraux, la tête de travail (30) comportant un capot de protection (84) qui la protège lorsqu'il est en position fermée et qui coupe un chemin optique défini entre les premier et second moyens optiques lorsqu'il sort de sa position fermée.

2. Ensemble mobile selon la revendication 1, les premier et les second moyens optiques comportant respectivement au moins un émetteur (50, 60, 64, 98, 110, 114, 118) et au moins un détecteur (52, 82, 64, 75, 79, 108, 112, 116, 120) de rayonnement.

3. Ensemble mobile selon la revendication 2, comportant deux émetteurs de rayonnement (50, 60) et deux détecteurs (52, 62, 75, 79) de rayonnement, chaque détecteur étant associé à un émetteur.

4. Ensemble mobile selon la revendication 2 ou 3, l'un au moins des émetteurs étant fixé sur l'un des moyens de détection d'obstacles latéraux, tandis que le détecteur associé est fixé sur l'autre moyen de détection d'obstacles latéraux.

5. Ensemble mobile selon la revendication 2 ou 3, l'un au moins des émetteurs et le détecteur associé (64, 66) étant fixés sur le même moyen de détection d'obstacles latéraux, et des moyens réfléchissants (68) étant fixés sur l'autre moyen de détection d'obstacles latéraux.

6. Ensemble mobile selon la revendication 2 ou 3, l'un au moins des émetteurs et le détecteur associé étant fixés sur une des extrémités (33) de la poutre (22), et des moyens réfléchissants (68) étant fixés soit sur les moyens de détection d'obstacles latéraux situés du côté de l'autre extrémité (31) de la poutre, soit sur l'autre extrémité (31) de la poutre.

7. Ensemble mobile selon l'une des revendications 1 à 6, comportant, en outre, des moyens optiques (72, 74) de détection d'obstacles lors du trajet de la poutre, chacun de ces moyens optiques étant monté sur la poutre par une liaison rigide ou par une liaison déformable (73, 75, 83).

8. Ensemble mobile selon la revendication 7, les moyens optiques de détection d'obstacles, montés sur la poutre, comportant au moins un premier émetteur (72) de rayonnement, et au moins un premier détecteur (74) de rayonnement.

9. Ensemble mobile selon la revendication 8, au moins le premier émetteur de rayonnement (72) et le premier détecteur de rayonnement (74) étant respectivement fixés à une première et à une seconde extrémité de la poutre.

10. Ensemble mobile selon la revendication 8, au moins le premier émetteur et le premier détecteur de rayonnement étant fixés à une même extrémité de la poutre, des moyens réfléchissants étant fixés à l'autre extrémité de la poutre de manière à réfléchir, en direction du premier détecteur, un rayonnement issu du premier émetteur.

11. Ensemble mobile selon l'une des revendications 7 à 10, les premiers et second moyens optiques fixés (50, 52, 60, 62) sur les premier et second moyens (40, 42) de détection d'obstacles latéraux, et les moyens optiques (72,74), montés sur la poutre, définissant un volume de sécurité autour de la poutre.

12. Ensemble mobile selon l'une des revendications 1 à 11, comportant en outre des premier et second moyens (39, 41) de détection de déplacement, associés respectivement aux premier et second moyens de détection d'obstacles latéraux par rapport à la poutre.

13. Ensemble mobile selon la revendication 12, les premier et second moyens (39, 41) de détection de déplacement, associés respectivement aux premier et second moyens de détection d'obstacles latéraux, comportant un détecteur électromécanique (41).

14. Ensemble mobile selon l'une des revendications 1 à 13, les premier et second moyens de détection d'obstacles latéraux (40, 42) comportant en outre au moins un support (77), monté sur l'un au moins des premier et second moyens de détection d'obstacles latéraux, des moyens optiques (75) étant fixés sur ce support (77) pour la détection d'obstacles lors du trajet de la poutre.

15. Ensemble mobile selon la revendication 14, le support (77) étant déformable suivant au moins ladite direction (X) perpendiculaire à l'axe de la poutre, et les moyens optiques (75) montés sur ce support permettant la détection d'une déformation de ce support selon cet axe (X).

16. Ensemble mobile selon l'une des revendications 1 à 15, au moins l'un (40) des premier et second moyens de détection d'obstacles latéraux comportant au moins une première partie mobile (40-1) déplaçable suivant ladite direction (X) sensiblement perpendiculaire à l'axe de la poutre, et une deuxième partie (40-2) articulée sur la première et pouvant se déplacer en rotation autour d'un axe sensiblement perpendiculaire à ladite direction, l'un des premier et second moyens optiques (50) étant fixé à cette deuxième partie.

17. Ensemble mobile selon l'une des revendications 1 à 16, les premier moyens de détection d'obstacles latéraux comportant une première et une deuxième partie (90, 100), déplaçables l'une par rapport à l'autre, chaque partie étant munie de moyens optiques (98, 108, 114, 116) pour détecter la présence d'un obstacle situé sur le trajet de la poutre et un déplacement relatif de l'un des moyens de détection d'obstacles latéraux par rapport à l'autre.

18. Ensemble mobile selon la revendication 17, les second moyens de détection d'obstacles latéraux comportant une troisième et une quatrième partie (92, 102), déplaçables l'une par rapport à l'autre, chaque partie étant munie de moyens optiques (110, 112, 118, 120) pour détecter la présence d'un obstacle sur le trajet de la poutre et un déplacement relatif de l'un des moyens de détection d'obstacles latéraux par rapport à l'autre.

19. Ensemble mobile selon l'une des revendications 1 à 18, les moyens déformables de détection d'obstacles latéraux comportant un support déformable (83) sur lequel sont montés les moyens optiques (75) de détection d'obstacle et de déformation du support déformable.

20. Ensemble mobile selon la revendication 19 comportant, en outre, des moyens optiques montés sur les moyens déformables de détection d'obstacle latéraux et définissant, avec les premier et second moyens optiques, un volume de sécurité autour de la poutre.

21. Ensemble mobile selon l'une des revendications 1 à 20, les premier et second moyens optiques, respectivement fixés sur les premier et second moyens de détection d'obstacles latéraux définissant un chemin optique passant par au moins un élément optique (80) qui est relié à la tête de travail (30) et dont la position varie par rapport à cette tête lorsque cet élément rencontre un obstacle au cours du déplacement de la poutre (22), et/ou de la tête de travail (30).

22. Ensemble mobile selon la revendication 21, l'élément optique (80) étant monté sur une structure comportant au moins un élément de support (37) sur la tête de travail (30) ou sur un chariot (35) sur lequel est montée cette tête de travail.

23. Ensemble mobile selon la revendication 22, l'élément de support étant en forme d'arceau (87, 89).

24. Ensemble mobile selon la revendication 23, comportant une pluralité d'éléments de support en forme d'arceaux (87, 89), définissant autour de la tête de travail (30) et/ou du chariot (35) une enveloppe de forme hémisphérique ou cylindrique.

25. Ensemble mobile selon la revendication 24, l'enveloppe de forme hémisphérique ou cylindrique étant mobile en rotation et/ou en translation par rapport à la tête de travail (30) ou au chariot (35).

26. Dispositif de traitement de matériaux flexibles, comprenant :
■ une table ou support de travail (2, 192) ;
■ un ou plusieurs ensemble(s) mobile(s) selon l'une des revendications 1 à 25 ;
■ des moyens pour déplacer ledit ensemble mobile sur la table ou sur le support de travail.

27. Dispositif de traitement selon la revendication 26, comportant, en outre, des moyens pour arrêter les moyens pour déplacer l'ensemble mobile lorsque les moyens optiques détectent la présence d'un obstacle sur le trajet de la poutre, ou un déplacement ou une déformation de l'un des moyens de détection d'obstacle latéraux.

28. Dispositif de traitement selon la revendication 26 ou 27, la table ou le support de travail (2) étant fixe.

29. Dispositif de traitement selon la revendication 26 ou 27, la table ou le support de travail (192) comportant un convoyeur mobile.

30. Dispositif de traitement selon l'une des revendications 26 à 29, la tête de travail de l'ensemble mobile supportant au moins un outil de découpe et/ou au moins un outil d'impression et/ou au moins un outil de dépose d'étiquettes et/ou de perforation.

## Patentansprüche

1. Bewegliche Einheit für eine Vorrichtung zur Bearbeitung, umfassend:
- einen Träger (22), der sich entlang zweier entgegengesetzter Richtungen verschieben kann und sich entlang einer Horizontalachse zwischen einem ersten und einem zweiten Ende (31, 33) erstreckt, und einen auf diesem Träger befestigten Bearbeitungskopf (30); **dadurch gekennzeichnet, daß** sie ferner umfaßt:
- erste und zweite Mittel zur Erfassung von seitlichen Hindernissen (40, 42, 77, 83, 90, 92, 100, 102), die an jedem Ende des Trägers befestigt sind und in Bezug auf den Träger und unabhängig voneinander in mindestens eine Richtung (X) im wesentlichen senkrecht zur Achse des Trägers verschiebbar oder verformbar sind und eine Erweiterung beiderseits des Trägers in dieselbe Richtung aufweisen,
- erste und zweite optische Mittel (50, 52, 60, 62, 75, 79), die am ersten bzw. zweiten Mittel zur Erfassung von seitlichen Hindernissen oder an mindestens einem der Enden des Trägers befestigt sind, um einerseits das Vorhandensein eines Hindernisses, das sich auf der Bahn des Trägers befindet, und andererseits eine relative Bewegung und/oder Verformung der Mittel zur Erfassung von seitlichen Hindernissen in Bezug auf das andere Mittel zur Erfassung von seitlichen Hindernissen zu erfassen, wobei der Bearbeitungskopf (30) eine Schutzkappe (84) umfaßt, die ihn schützt, wenn sie sich in geschlossener Position befindet, und die einen optischen Weg schneidet, der zwischen den ersten und zweiten optischen Mitteln definiert ist, wenn sie ihre geschlossene Position verläßt.

2. Bewegliche Einheit nach Anspruch 1, wobei die ersten und die zweiten optischen Mittel jeweils mindestens einen Sender (50, 60, 64, 98, 110, 114, 118) und mindestens einen Detektor (52, 82, 64, 75, 79, 108, 112, 116, 120) von Strahlung umfassen.

3. Bewegliche Einheit nach Anspruch 2, umfassend zwei Sender von Strahlung (50, 60) und zwei Detektoren von Strahlung (52, 62, 75, 79), wobei jeder Detektor einem Sender zugeordnet ist.

4. Bewegliche Einheit nach Anspruch 2 oder 3, wobei mindestens einer der Sender auf einem der Mittel zur Erfassung von seitlichen Hindernissen befestigt ist, während der zugehörige Detektor auf dem anderen Mittel zur Erfassung von seitlichen Hindernissen befestigt ist.

5. Bewegliche Einheit nach Anspruch 2 oder 3, wobei mindestens einer der Sender und der zugehörige Detektor (64, 66) auf demselben Mittel zur Erfassung von seitlichen Hindernissen befestig ist, und Reflexionsmittel (68) auf dem anderen Mittel zur Erfassung von seitlichen Hindernissen befestigt sind.

6. Bewegliche Einheit nach Anspruch 2 oder 3, wobei mindestens einer der Sender und der zugehörige Detektor auf einem der Enden (33) des Trägers (22) befestigt sind, und Reflexionsmittel (68) entweder auf den Mitteln zur Erfassung von seitlichen Hindernissen, die sich auf der Seite des anderen Endes (31) des Trägers befinden, oder auf dem anderen Ende (31) des Trägers befestigt sind.

7. Bewegliche Einheit nach einem der Ansprüche 1 bis 6, ferner umfassend optische Mittel (72, 74) zur Erfassung von Hindernissen auf der Bahn des Trägers, wobei jedes dieser optischen Mittel auf dem Träger durch eine starre Verbindung oder durch eine verformbare Verbindung (73, 75, 83) befestigt ist.

8. Bewegliche Einheit nach Anspruch 7, wobei die optischen Mittel zur Erfassung von Hindernissen, die auf dem Träger befestigt sind, mindestens einen ersten Sender (72) von Strahlung und mindestens einen ersten Detektor (74) von Strahlung umfassen.

9. Bewegliche Einheit nach Anspruch 8, wobei mindestens der erste Sender von Strahlung (72) und der erste Detektor von Strahlung (74) an einem ersten bzw. einem zweiten Ende des Trägers befestigt sind.

10. Bewegliche Einheit nach Anspruch 8, wobei mindestens der erste Sender und der erste Detektor von Strahlung an einem selben Ende des Trägers befestigt sind, wobei Reflexionsmittel am anderen Ende des Trägers derart befestigt sind, daß sie in Richtung des ersten Detektors eine vom ersten Sender kommende Strahlung reflektieren.

11. Bewegliche Einheit nach einem der Ansprüche 7 bis 10, wobei die ersten und zweiten optischen Mittel (50, 52, 60, 62), die auf dem ersten und dem zweiten Mittel (40, 42) zur Erfassung von seitlichen Hindernissen angeordnet sind, und die auf dem Träger befestigten optischen Mittel (72, 74) ein Sicherheitsvolumen um den Träger definieren.

12. Bewegliche Einheit nach einem der Ansprüche 1 bis 11, ferner umfassend erste und zweite Mittel (39, 41) zur Erfassung einer Verschiebung, die den ersten bzw. zweiten Mitteln zur Erfassung von seitlichen Hindernissen in Bezug auf den Träger zugeordnet sind.

13. Bewegliche Einheit nach Anspruch 12, wobei die ersten und zweiten Mittel (39, 41) zur Erfassung einer Verschiebung, die den ersten bzw. zweiten Mitteln zur Erfassung von seitlichen Hindernissen zugeordnet sind, einen elektromechanischen Detektor (41) umfassen.

14. Bewegliche Einheit nach einem der Ansprüche 1 bis 13, wobei die ersten und zweiten Mittel zur Erfassung von seitlichen Hindernissen (40, 42) ferner mindestens eine Stütze (77) umfassen, die auf mindestens einem der ersten und zweiten Mittel zur Erfassung von seitlichen Hindernissen befestigt ist, wobei optische Mittel (75) auf dieser Stütze (77) für die Erfassung von Hindernissen auf der Bahn des Trägers befestigt sind.

15. Bewegliche Einheit nach Anspruch 14, wobei die Stütze (77) in mindestens eine Richtung (X) senkrecht auf die Achse des Trägers verformbar ist, und die auf dieser Stütze befestigten optischen Mittel (75) die Erfassung einer Verformung dieser Stütze entlang dieser Achse (X) ermöglichen.

16. Bewegliche Einheit nach einem der Ansprüche 1 bis 15, wobei mindestens eines (40) der ersten und zweiten Mittel zur Erfassung von seitlichen Hindernissen mindestens einen ersten beweglichen Teil (40-1), der in die Richtung (X) im wesentlichen senkrecht auf die Achse des Trägers verschiebbar ist, und einen zweiten Teil (40-2) umfassen, der auf dem ersten angelenkt ist und sich in Drehung um eine Achse im wesentlichen senkrecht auf diese Richtung verschieben kann, wobei eines der ersten und zweiten optischen Mittel (50) an diesem zweiten Teil befestigt ist.

17. Bewegliche Einheit nach einem der Ansprüche 1 bis 16, wobei die ersten Mittel zur Erfassung von seitlichen Hindernissen einen ersten und einen zweiten Teil (90, 100) umfassen, die zueinander verschiebbar sind, wobei jeder Teil mit optischen Mitteln (98, 108, 114, 116) versehen ist, um das Vorhandensein eines auf der Bahn des Trägers befindlichen Hindernisses und eine relative Verschiebung eines der Mittel zur Erfassung von seitlichen Hindernissen in Bezug auf das andere zu erfassen.

18. Bewegliche Einheit nach Anspruch 17, wobei die zweiten Mittel zur Erfassung von seitlichen Hindernissen einen dritten und einen vierten Teil (92, 102) umfassen, die zueinander verschiebbar sind, wobei jeder Teil mit optischen Mitteln (110, 112, 118, 120) versehen ist, um das Vorhandensein eines Hindernisses auf der Bahn des Trägers und eine relative Verschiebung eines der Mittel zur Erfassung von seitlichen Hindernissen in Bezug auf das andere zu erfassen.

19. Bewegliche Einheit nach einem der Ansprüche 1 bis 18, wobei die verformbaren Mittel zur Erfassung von seitlichen Hindernissen eine verformbare Stütze (83) umfassen, auf der die optischen Mittel (75) zur Erfassung eines Hindernisses und einer Verformung der verformbaren Stütze befestigt sind.

20. Bewegliche Einheit nach Anspruch 19, ferner umfassend optische Mittel, die auf den verformbaren Mitteln zur Erfassung eines seitlichen Hindernisses angeordnet sind, und die mit den ersten und zweiten optischen Mitteln ein Sicherheitsvolumen um den Träger bilden.

21. Bewegliche Einheit nach einem der Ansprüche 1 bis 20, wobei die ersten und die zweiten optischen Mittel, die an den ersten bzw. zweiten Mitteln zur Erfassung von seitlichen Hindernissen befestigt sind, einen optischen Weg definieren, der durch mindestens ein optisches Element (80) verläuft, das mit dem Bearbeitungskopf (30) verbunden ist, und dessen Position sich in Bezug auf diesen Kopf ändert, wenn dieses Element während der Verschiebung des Trägers (22) und/oder des Bearbeitungskopfes (30) auf ein Hindernis trifft.

22. Bewegliche Einheit nach Anspruch 21, wobei das optische Element (80) auf einer Struktur befestigt ist, umfassend mindestens ein Element (37) zur Abstützung auf dem Bearbeitungskopf (30) oder auf einem Wagen (35), auf dem dieser Bearbeitungskopf befestigt ist.

23. Bewegliche Einheit nach Anspruch 22, wobei das Stützelement Bogenform (87, 89) hat.

24. Bewegliche Einheit nach Anspruch 23, umfassend eine Vielzahl von Stützelementen in Bogenform (87, 89), die um den Arbeitskopf (30) und/oder den Wagen (35) eine Hülle mit Halbkugel- oder Zylinderform bilden.

25. Bewegliche Einheit nach Anspruch 24, wobei die Hülle mit Halbkugel- oder Zylinderform in Drehung und/oder Translation in Bezug auf den Bearbeitungskopf (30) oder den Wagen (35) beweglich ist.

26. Vorrichtung zur Bearbeitung von biegsamen Materialien, umfassend:
- einen Bearbeitungstisch oder -träger (2, 192);
- eine oder mehrere bewegliche Einheiten nach einem der Ansprüche 1 bis 25;
- Mittel, um die bewegliche Einheit auf dem Bearbeitungstisch oder -träger zu verschieben.

27. Vorrichtung zur Bearbeitung nach Anspruch 26, ferner umfassend Mittel, um die Mittel zum Verschieben der beweglichen Einheit festzustellen, wenn die optischen Mittel das Vorhandensein eines Hindernisses auf der Bahn des Trägers oder eine Verschiebung oder Verformung eines der Mittel zur Erfassung von seitlichen Hindernissen erfassen.

28. Vorrichtung zur Bearbeitung nach Anspruch 26 oder 27, wobei der Bearbeitungstisch oder -träger (2) feststehend ist.

29. Vorrichtung zur Bearbeitung nach Anspruch 26 oder 27, wobei der Bearbeitungstisch oder -träger (192) eine bewegliche Fördereinrichtung umfaßt.

30. Vorrichtung zur Bearbeitung nach einem der Ansprüche 26 bis 29, wobei der Bearbeitungskopf der beweglichen Einheit mindestens ein Schneidwerkzeug und/oder mindestens ein Druckwerkzeug und/oder mindestens ein Werkzeug zum Aufbringen von Etiketten und/oder zum Lochen trägt.

## Claims

1. A moving assembly for a working system, said assembly comprising:
■ a boom (22) suitable for moving along two opposite directions and extending along a horizontal axis between first and second ends (31, 33) and a working head (30) mounted on said boom; said assembly being **characterised in that** it further includes:
■ first and second lateral obstacle sensor systems (40, 42, 77, 83, 90, 92, 100, 102) mounted at each end of the boom, movable or deformable, relative to the boom and independently of each other, in at least one direction (X) substantially perpendicular to the axis of the boom, and having an extension in the same direction on either side of the boom; and
■ respective first and second optical systems (50, 52, 60, 62, 75, 79) fixed to the first and second lateral obstacle sensor systems or to at least one of the ends of the boom, to detect firstly the presence of an obstacle on the path of the boom and secondly, deformation and/or relative movement of the lateral obstacle sensor system relative to the other lateral obstacle sensor system, the working head (30) including a protective cover (84) which protects it when it is in its closed position and which intersects an optical path defined between the first and second optical systems when it is not in its closed position.

2. A moving assembly according to claim 1, the first and second optical systems respectively including at least one radiation emitter (50, 60, 64, 98, 110, 114, 118) and at least one radiation sensor (52, 82, 64, 75, 79, 108, 112, 116, 120).

3. A moving assembly according to claim 2, including two radiation emitters (50, 60) and two radiation sensors (52, 62, 75, 79), each sensor being associated with an emitter.

4. A moving assembly according to claim 2 or claim 3, at least one of the emitters being fixed to one of the lateral obstacle sensor systems while the associated sensor is fixed to the other lateral obstacle sensor system.

5. A moving assembly according to claim 2 or claim 3, at least one of the emitters and the associated sensor (64, 66) being fixed to the same lateral obstacle sensor system and a reflector system (68) being fixed to the other lateral obstacle sensor system.

6. A moving assembly according to claim 2 or claim 3, at least one of the emitters and the associated sensor being fixed to one end (33) of the boom (22) and a reflector system (68) being fixed either to the lateral obstacle sensor system at the other end (31) of the boom or to the other end (31) of the boom.

7. A moving assembly according to one of claims 1 to 6, further including optical systems (72, 74) for detecting obstacles on the path of the boom, each optical system being mounted on the boom by means of a rigid or deformable connection (73, 75, 83).

8. A moving assembly according to claim 7, the optical systems for detecting obstacles as mounted on the boom including at least a first radiation emitter (72) and at least a first radiation sensor (74).

9. A moving assembly according to claim 8, at least the first radiation emitter (72) and the first radiation sensor (74) being respectively fixed to a first end and to a second end of the boom.

10. A moving assembly according to claim 8, at least the first radiation emitter and the first radiation sensor being fixed to the same end of the boom, a reflector system being fixed to the other end of the boom to reflect radiation from the first emitter toward the first sensor.

11. A moving assembly according to one of claims 7 to 10, the first and second fixed optical systems (50, 52, 60, 62) on the first and second lateral obstacle sensor systems (40, 42) and the optical systems (72,74) mounted on the boom, defining a safety volume around the boom.

12. A moving assembly according to one of claims 1 to 11, further including respective first and second movement sensor systems (39, 41) associated with the first and second lateral obstacle sensor systems relative to the boom.

13. A moving assembly according to claim 12, the respective first and second movement sensor systems (39, 41) associated with the first and second lateral obstacle sensor systems, including an electromechanical sensor (41).

14. A moving assembly according to one of claims 1 to 13, the first and second lateral obstacle sensor systems (40, 42) further including at least a support (77) mounted on at least one of the first and second lateral obstacle sensor systems, an optical system (75) being fixed to the support (77) to detect obstacles when the boom moves.

15. A moving assembly according to claim 14, the support (77) being deformable in at least said direction (X) perpendicular to the axis of the boom and the optical systems (75) mounted on the support making it possible to detect deformation of said support along the axis (X).

16. A moving assembly according to one of claims 1 to 15, at least one (40) of the first and second lateral obstacle sensor systems including at least a first moving part (40-1) movable in said direction (X) substantially perpendicular to the axis of the boom, and a second part (40-2) articulated to the first part and able to rotate about an axis substantially perpendicular to said direction, one of the first and second optical systems (50) being fixed to said second part.

17. A moving assembly according to one of claims 1 to 16, the first lateral obstacle sensor system including first and second parts (90, 100) moveable relative to each other and each provided with optical systems (98, 108, 114, 116) for detecting the presence of an obstacle on the path of the boom and relative movement of one of the lateral obstacle sensor systems with respect to the other one.

18. A moving assembly according to claim 17, the second lateral obstacle sensor system including third and fourth parts (92, 102) moveable relative to each other and each provided with optical systems (110, 112, 118, 120) for detecting the presence of an obstacle on the path of the boom and relative movement of one of the lateral obstacle sensor systems with respect to the other one.

19. A moving assembly according to one of claims 1 to 18, the deformable lateral obstacle sensor system including a deformable support (83) on which the optical systems (75) for detecting obstacles and deformation of the deformable support are mounted.

20. A moving assembly according to claim 19, further including optical systems mounted on the deformable lateral obstacle sensor systems and defining, with the first and second optical systems, a safety volume around the boom.

21. A moving assembly according to one of claims 1 to 20, the first and second optical systems respectively fixed to the first and second lateral obstacle sensor systems defining an optical path through at least one optical element (80) connected to the working head (30) whose position relative to said head varies if said element encounters an obstacle during movement of the boom (22) and/or of the working head (30).

22. A moving assembly according to claim 21, the optical element (80) being mounted on a structure including at least a support element (37) on the working head (30) or on a carriage (35) on which the working head is mounted.

23. A moving assembly according to claim 22, the support element taking the form of a hoop (87, 89).

24. A moving assembly according to claim 23, including a plurality of support elements taking the form of hoops (87, 89) defining a hemispherical or cylindrical envelope around the working head (30) and/or the carriage (35).

25. A moving assembly according to claim 24, the hemispherical or cylindrical envelope being movable in rotation and/or in translation relative to the working head (30) or the carriage (35).

26. A system for processing flexible materials, the system comprising:
■ a work support or table (2, 192);
■ one or more moving assemblies according to one of claims 1 to 25; and
■ a system for moving said moving assembly on the work support or table.

27. A processing system according to claim 26, further including a system for stopping the system for moving the moving assembly if the optical system detects the presence of an obstacle on the path of the boom or movement or deformation of one of the lateral obstacle sensor systems.

28. A processing system according to claim 26 or claim 27, the work support or table (2) being fixed

29. A processing system according to claim 26 or claim 27, the work support or table (192) including a moving conveyor.

30. A processing system according to one of claims 26 to 29, the working head of the moving assembly supporting at least a cutting tool and/or at least a printing tool and/or at least a labelling and/or perforation tool.
